(19) Europäisches Patentamt
European Patent Office
Office européen des brevets

(11) EP 2 137 041 B1

(12) EUROPÄISCHE PATENTSCHRIFT

(45) Veröffentlichungstag und Bekanntmachung des Hinweises auf die Patenterteilung:
**17.11.2010 Patentblatt 2010/46**

(51) Int Cl.:
***B60W 30/08*** *(2006.01)*

(21) Anmeldenummer: **08708481.0**

(22) Anmeldetag: **31.01.2008**

(86) Internationale Anmeldenummer:
**PCT/EP2008/051168**

(87) Internationale Veröffentlichungsnummer:
**WO 2008/113636 (25.09.2008 Gazette 2008/39)**

(54) **VERFAHREN ZUR BERECHNUNG EINER KOLLISIONSVERMEIDENDEN TRAJEKTORIE FÜR EIN FAHRMANÖVER EINES FAHRZEUGS**

METHOD FOR THE CALCULATION OF A COLLISION-PREVENTING TRAJECTORY FOR A DRIVING MANEUVER OF A VEHICLE

PROCEDE POUR CALCULER UNE TRAJECTOIRE D'EVITEMENT DE COLLISION POUR UNE MANOEUVRE DE CONDUITE D'UN VEHICULE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.03.2007 DE 102007013303**

(43) Veröffentlichungstag der Anmeldung:
**30.12.2009 Patentblatt 2009/53**

(73) Patentinhaber: **Robert Bosch GmbH**
**70442 Stuttgart (DE)**

(72) Erfinder:
• **STAEMPFLE, Martin**
**71701 Schwieberdingen (DE)**
• **SCHMIDT, Christian**
**70190 Stuttgart (DE)**
• **BRANZ, Wolfgang**
**71640 Ludwigsburg (DE)**

(56) Entgegenhaltungen:
WO-A-2006/097467          DE-A1-102004 056 120
DE-A1-102006 016 185          DE-A1-102006 024 204
US-A1- 2004 236 491

EP 2 137 041 B1

**Beschreibung**

Stand der Technik

Die Erfindung betrifft ein Verfahren zur Berechnung einer kollisionsvermeidenden Trajektorie für ein Fahrmanöver eines Fahrzeugs gemäß dem Oberbegriff von Anspruch 1. Die Erfindung betrifft ebenfalls ein Verfahren zur Kollisionsvermeidung für ein Fahrzeug. Des Weiteren betrifft die Erfindung ein Computerprogramm, ein Computerprogrammprodukt und eine Vorrichtung, um derartige Verfahren auszuführen bzw. durchzuführen.

Die DE 10 2004 056 120 A1 betrifft ein Verfahren zur Kollisionsvermeidung oder Kollisionsfolgenminderung während einer Fahrt, bei der sich ein Kraftfahrzeug einem Hindernis, insbesondere einem vorausfahrenden Fahrzeug, nähert, wobei bei einem Verfahren zumindest die Relativgeschwindigkeit zwischen dem Kraftfahrzeug und dem Hindernis ermittelt wird, eine bis zum spätesten Beginn eines kollisionsvermeidenden Ausweichmanövers verbleibende Zeitspanne als Ausweichzeitspanne ermittelt wird und eine kollisionsvermeidende oder kollisionsfolgenmindernde Aktion in Abhängigkeit der ermittelten Ausweichzeitspanne vorgenommen wird.

Insbesondere aus der Robotik sind unterschiedliche Verfahren zur Trajektorienplanung bekannt, anhand welcher ein Roboter kollisionsfrei durch eine Menge von Hindernissen bewegt werden kann. Dabei kann es sich sowohl um einen Manipulator als auch um ein Fahrzeug handeln. Die Bewegung kann im zwei- oder dreidimensionalen Raum erfolgen.

Aus der Praxis bekannt sind Verfahren, welche lediglich stehende Hindernisse berücksichtigen. Weitere Verfahren sind in der Lage, auch bewegliche Hindernisse einzubeziehen. Die sogenannte "Roadmaps-Methode" verbindet sämtliche Eckpunkte der erfassten Hindernisse miteinander und konstruiert somit einen Graphen über alle möglichen Pfade. Anhand dieses Graphen kann nun ein Weg durch eine Umgebung mit Hindernissen berechnet werden. Eine derartige Vorgehensweise ist beispielsweise in der US 2005/0192749 A1 offenbart. Darüber hinaus sind Verfahren bekannt, welche die gesamte Umgebung in kollisionsfreie und kollidierende Zellen unterteilen und eine Auswahl der kollisionsfreien Zellen zu einem kollisionsfreien Weg durch vorhandene Hindernisse verbinden. Derartige Verfahren sind jedoch nur für stehende Hindernisse geeignet.

Zudem existieren Methoden, welche auf den Hindernissen zugeordneten virtuellen Kräften beruhen. Besitzen sämtliche Hindernisse eine abstoßende und nur der Zielpunkt eine anziehende Wirkung auf den Roboter, so kann ein Potenzialfeld ähnlich einem elektrischen Feld konstruiert werden, durch welches sich ein Pfad durch die Hindernisse anhand der sich addierenden Gesamtkraft proportional zum Gradienten des Feldes berechnen lässt. Dieses Prinzip ist unabhängig davon, ob sich die Hindernisse bewegen oder nicht, da sich der Pfad nur aus der resultierenden Gesamtkraft des Feldes zum jeweils aktuellen Zeitpunkt ergibt. Somit können derartige Methoden in gleichem Maße für bewegte und nicht-bewegte Hindernisse eingesetzt werden. Die in der DE 42 07 001 A1 beschriebene Roboterführungsvorrichtung verwendet ein Widerstandsgitter mit Knoten, von denen jeder eine individuelle und diskrete Position innerhalb einer befahrbaren Umgebung darstellt, sowie Verbindungen zwischen den Knoten. Verbindungen zwischen Knoten mit offener Schaltung führen zu Fehlern beim Versuch des Roboters, längs eines fahrbaren Pfads zu fahren und können zu Kollisionen mit Hindernissen innerhalb der befahrbaren Umgebung führen.

US 2004/236 491 A1 ist als nächstliegenden Stand der Technik zu sehen und zeigt ein Verfahren zur Berechnung einer kollisionsvermeidenden Trajektorie für ein Fahrmanöver eines Fahrzeugs, insbesondere Kraftfahrzeugs, um wenigstens einem sich während der Fahrt dem Kraftfahrzeug nähernden Hindernis auszuweichen.

Vorteile der Erfindung

Das erfindungsgemäße Verfahren zur Berechnung einer kollisionsvermeidenden bzw. kollisionsfolgenmindernden Trajektorie für ein Fahrmanöver eines Fahrzeugs, insbesondere Kraftfahrzeugs, um wenigstens einem sich während der Fahrt dem Kraftfahrzeug nähernden Hindernis auszuweichen, wobei die laterale Geschwindigkeit des Kraftfahrzeugs unabhängig von der longitudinalen Geschwindigkeit des Kraftfahrzeugs bei der Berechnung berücksichtigt wird, ermöglicht eine sehr effektive, einfache und schnelle Trajektorienberechnung für Fahrzeuge, insbesondere Kraftfahrzeuge bzw. fahrzeugähnliche mobile Roboter für verkehrstypische Szenarien. Das erfindungsgemäße Verfahren eignet sich insbesondere für Verkehrsszenarien, in denen typischerweise deutlich höhere Geschwindigkeiten in longitudinaler als in lateraler Richtung vorherrschen. Dadurch lässt sich in vorteilhafter Weise die Trajektorienplanung auf eine Berechnung der lateralen Position bei bekannter longitudinaler Position, die sich aus der als bekannt voraussetzbaren longitudinalen Geschwindigkeit ergibt, reduzieren. Somit kann die ursprünglich zweidimensionale Wegplanung um eine Dimension reduziert werden, was zu einer deutlichen Vereinfachung und somit einer schnelleren Berechnung führt.

Sonach wird ein Verfahren vorgeschlagen, welches eine Trajektorie für das eigene Fahrzeug im zweidimensionalen Raum für stehende und bewegte Hindernisse berechnen kann, und für Szenarien und Hinderniskonstellationen des typischen Straßenverkehrs geeignet ist. Durch die Einschränkung der Dimension kann die Trajektorie sehr effektiv und einfach berechnet werden. Grundsätzlich ist jedoch eine Erweiterung auf eine weitere Dimension denkbar. Durch die Annahme einer im Verhältnis zur Längsgeschwindigkeit relativ kleinen seitlichen bzw. lateralen Geschwindigkeit lassen sich in guter Näherung die Längs- und Querkinematik entkoppeln. Somit kann relativ einfach eine Trajektorie gefunden werden, die kollisionsfrei an potenziellen Hindernissen vorbeiführt. Dies kann dadurch erreicht werden, dass die Passierungsorte und -zeitpunkte anhand der bekannten Längsgeschwindigkeit des Fahrzeugs bestimmt und die möglichen erreichbaren lateralen Positionen an diesen Orten berechnet werden.

In Anspruch 10 ist ein Verfahren zur Kollisionsvermeidung für ein Fahrzeug, insbesondere Kraftfahrzeug, angegeben.

Ein Computerprogramm mit Programmcodemitteln bzw. ein Computerprogrammprodukt mit Programmcodemitteln, die auf einem computerlesbaren Datenträger gespeichert sind, um die erfindungsgemäßen Verfahren auszuführen, sind in Anspruch 11 bzw. Anspruch 12 angegeben.

Anspruch 13 betrifft eine Vorrichtung, insbesondere Fahrerassistenzsystem eines Fahrzeugs, insbesondere Kraftfahrzeugs, zur Durchführung des erfindungsgemäßen Verfahrens.

Das erfindungsgemäße Verfahren zur Berechnung einer kollisionsvermeidenden Trajektorie für ein Fahrmanöver eines Fahrzeugs bzw. das erfindungsgemäße Verfahren zur Kollisionsvermeidung für ein Fahrzeug, insbesondere Kraftfahrzeug, ist vorzugsweise als Computerprogramm auf einer Steuereinrichtung eines Fahrerassistenzsystems eines Fahrzeugs, insbesondere Kraftfahrzeugs, realisiert, wobei auch andere Lösungen selbstverständlich in Frage kommen. Dazu ist das Computerprogramm in einem Speicherelement der Steuereinrichtung gespeichert. Durch Abarbeitung auf einem Mikroprozessor der Steuereinrichtung wird das Verfahren ausgeführt. Das Computerprogramm kann auf einem computerlesbaren Datenträger (Diskette, CD, DVD, Festplatte, USB-Memory Stick, Speicherkarte oder dergleichen) oder einem Internetserver als Computerprogrammprodukt gespeichert sein und von dort aus in das Speicherelement der Steuereinrichtung übertragen werden.

Vorteilhafte Ausgestaltungen und Weiterbildungen der Erfindung ergeben sich aus den Unteransprüchen. Nachfolgend ist anhand der Zeichnung ein Ausführungsbeispiel der Erfindung prinzipmäßig beschrieben.

Kurzbeschreibung der Zeichnung

Es zeigen:

Figur 1    Eine stark vereinfachte schematische Darstellung eines Kraftfahrzeugs, in wel- chem ein erfindungsgemäßes Verfahren implementiert ist;

Figur 2    eine vereinfachte schematische Darstellung einer Abhängigkeit der lateralen Ge- schwindigkeit $v_y$ von der lateralen Position y eines Kraftfahrzeugs;

Figur 3    ein vereinfachtes Diagramm einer Propagation einer lateralen Geschwindigkeit $v_y$ in Abhängigkeit von der lateralen Position y eines Kraftfahrzeugs;

Figur 4    eine vereinfachte schematische Darstellung einer Entwicklung der erreichbaren lateralen Positionen y für ein Kraftfahrzeug nach mehrmaliger Begrenzung durch Hindernisse;

Figur 5    eine vereinfachte Darstellung von Sperrbereichen und Passierungstoren inner- halb des erfindungsgemäßen Verfahrens; und

Figur 6    eine Darstellung eines Fahrschlauchs mit Stützstellen zur Beschreibung einer kollisionsvermeidenden Trajektorie.

Beschreibung von Ausführungsbeispielen

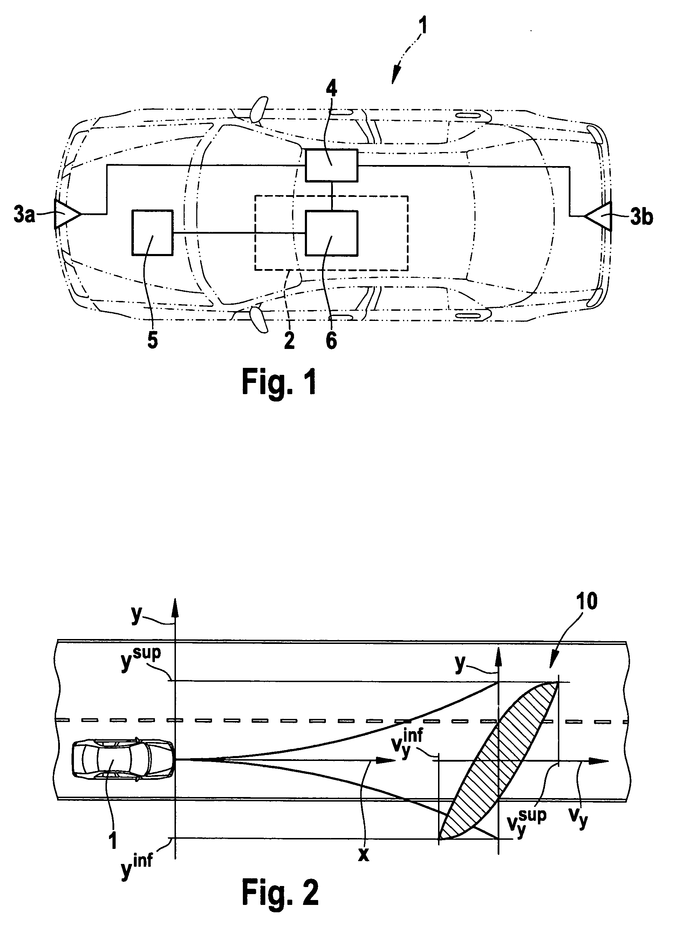

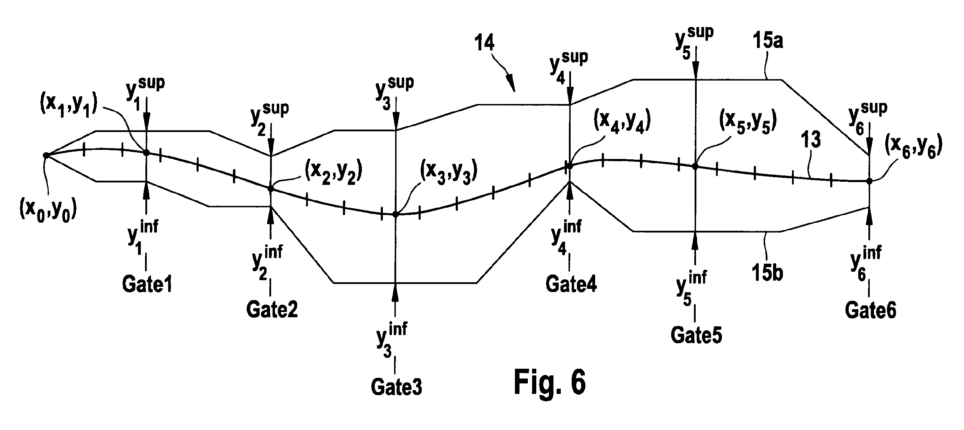

Ein erfindungsgemäßes Verfahren zur Berechnung einer kollisionsvermeidenden Trajektorie 13 (siehe Figur 6) für ein Fahrmanöver eines Fahrzeugs wird nachfolgend anhand eines Kraftfahrzeugs 1 (siehe Figur 1) beschrieben. In weiteren, nicht dargestellten Ausführungsbeispielen könnten - mit den entsprechenden Veränderungen - selbstverständlich auch andere Fahrzeuge, wie beispielsweise fahrzeugähnliche mobile Roboter oder dergleichen mit einer Implementierung des erfindungsgemäßen Verfahrens versehen werden.

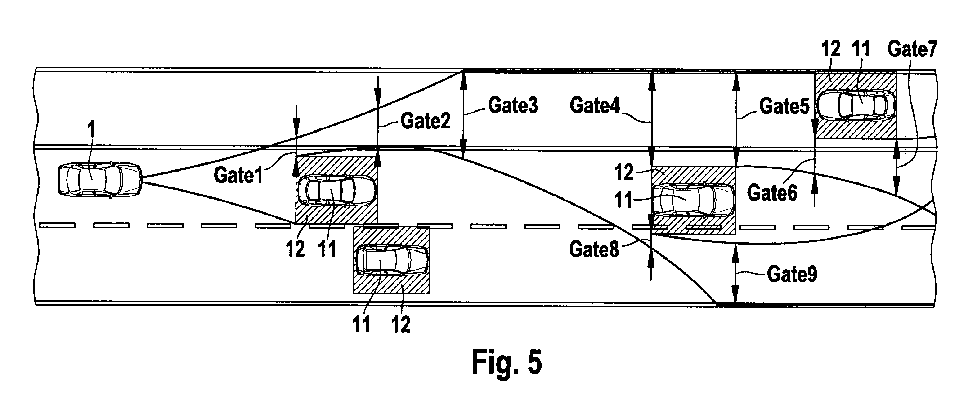

In Figur 1 ist das Kraftfahrzeug 1 dargestellt, auf welchem das erfindungsgemäße Verfahren zur Berechnung einer kollisionsvermeidenden Trajektorie 13 für ein Fahrmanöver des Kraftfahrzeugs 1, um wenigstens einem sich während der Fahrt des Kraftfahrzeug 1 nähernden Hindernis 11 (siehe Figur 5) auszuweichen, implementiert ist. Darauf basierend kann eine als Fahrerassistenzsystem 2 ausgebildete Vorrichtung zur Durchführung des erfindungsgemäßen Verfahrens den Fahrer beim Ausweichen vor Hindernissen 11 unterstützen und ihn autonom oder semiautonom im Fall einer bevorstehenden Kollision auf eine sichere Trajektorie 13 führen, die mit keinem das eigene Kraftfahrzeug 1 umgebendem Hindernis 11 kollidiert. Dies kann zum einen durch Anzeige einer entsprechenden Warnung oder zum anderen durch einen aktiven Eingriff des Fahrerassistenzsystems 2 mittels eines korrigierenden Bremseingriffs über eine gezielte Bremskrafterhöhung oder mittels eines entsprechenden Lenkeingriffs über ein nicht dargestelltes Lenksystem des Kraftfahrzeugs 1, erfolgen. Das Kraftfahrzeug 1 weist eine Erfassungseinrichtung 3a zur messtechnischen Erfassung der Verkehrssituation vor dem Kraftfahrzeug 1 sowie eine Erfassungseinrichtung 3b zur Erfassung der Verkehrssituation hinter dem Kraftfahrzeug 1 auf. Die Erfassungseinrichtungen 3a, 3b können als umgebungserfassende Sensorik ausgebildet sein, beispielsweise als Radar, Kamera, Laserscanner oder dergleichen. Die Erfassungseinrichtungen 3a, 3b stehen mit einer Auswerteeinrichtung 4 in Verbindung, mit welcher aufgrund der Sensorsignale der Erfassungseinrichtungen 3a, 3b Größen, wie der Abstand, die Geschwindigkeit oder die Beschleunigung vorausfahrender bzw. nachfolgender Objekte bzw. Hindernisse 11, ermittelt und verfolgt werden können. Darüber hinaus weist das Kraftfahrzeug 1 Mittel 5 zum Ermitteln von Fahrzeugdaten des Kraftfahrzeugs 1, wie beispielsweise der eigenen Fahrzeuggeschwindigkeit, der Eigenbeschleunigung, des angenommenen Reibwerts der Straße, der Bremsbetätigung, der Lenkradbetätigung bzw. des Lenkwinkels, auf. Die Mittel 5 können auch in anderen, nicht dargestellten Fahrzeugsystemen, wie beispielsweise einem elektronischen Stabilitätsprogramm (ESP) oder einem Lenksystem vorgesehen sein. Eine Steuereinrichtung 6 ist elektronisch über die Auswerteeinrichtung 4 mit den Erfassungseinrichtungen 3a, 3b verbunden und erhält über die Verbindung Daten über vorausfahrende bzw. nachfolgende Hindernisse 11. Des Weiteren ist die Steuerungseinrichtung 6 mit den Mitteln 5 zum Ermitteln von Fahrzeugdaten elektronisch verbunden, d. h. die Steuereinrichtung 6 erhält die entsprechenden Fahrzeugdaten von den Mitteln 5 bzw. über einen CAN-Bus des Kraftfahrzeugs 1 von anderen Fahrzeugsystemen, insbesondere Fahrzeugdynamiksystemen (nicht dargestellt). Im Rahmen des Fahrerassistenzsystems 2 läuft nun auf der Steuereinrichtung 6 das erfindungsgemäße Verfahren zur Kollisionsvermeidung für das Kraftfahrzeug 1 ab, bei welchem bei einem sich während der Fahrt nähernden Hindernis 11 ein Fahrmanöver des Kraftfahrzeugs 1 zum Ausweichen autonom oder semiautonom durchgeführt oder über eine Warneinrichtung dem Fahrer oder weiteren Fahrzeugsystemen vorgeschlagen wird. Das Fahrmanöver beruht seinerseits auf der durch das erfindungsgemäße Berechnungsverfahren ermittelten Trajektorie 13, wobei die laterale Geschwindigkeit $v_y$ des Kraftfahrzeugs 1 unabhängig von der longitudinalen Geschwindigkeit des Kraftfahrzeugs 1 bei der Berechnung berücksichtigt wird. Durch die Entkopplung von Längs- und Quergeschwindigkeit bzw. Longitudinal- und Lateralgeschwindigkeit $v_x$ und $v_y$ lässt sich ein lateraler Versatz $\Delta y$ durch die folgende Gleichung (a) für ein Zeitintervall $\Delta t$ beschreiben:

$$(a) \qquad \Delta y = v_y \Delta t + \tfrac{1}{2} a_y \Delta t^2$$

Um die maximal erreichbare laterale Position $\Delta y$ an dem nächsten Hindernis 11 zu berechnen, muss einerseits die maximale Beschleunigung $a_y$ angenommen, andererseits aber auch die Geschwindigkeit $v_y$ an dem vorherigen Hindernis 11 herangezogen werden. Die eindimensionalen Kinematikgleichungen lauten für die laterale Position y und die laterale Geschwindigkeit $v_y$ für ein Zeitintervall $\Delta t$ ($y_0$ und $v_0$ bezeichnen die laterale Position und die laterale Geschwindigkeit beim Start der Berechnung, d. h. die jeweiligen Startpunkte):

$$(b) \qquad y = y_0 + v_0 \Delta t + \tfrac{1}{2} a_y \Delta t^2$$

$$(c) \qquad v_y = v_0 + a_y \Delta t$$

Setzt man die Gleichungen (b), (c) ineinander ein und eliminiert die Zeitabhängigkeit, so ergibt sich die folgende Abhängigkeit (d) der Geschwindigkeit $v_y$ von der Position y:

$$(d) \qquad v_y = \pm\sqrt{v_0^2 + 2a_y(y - y_0)}$$

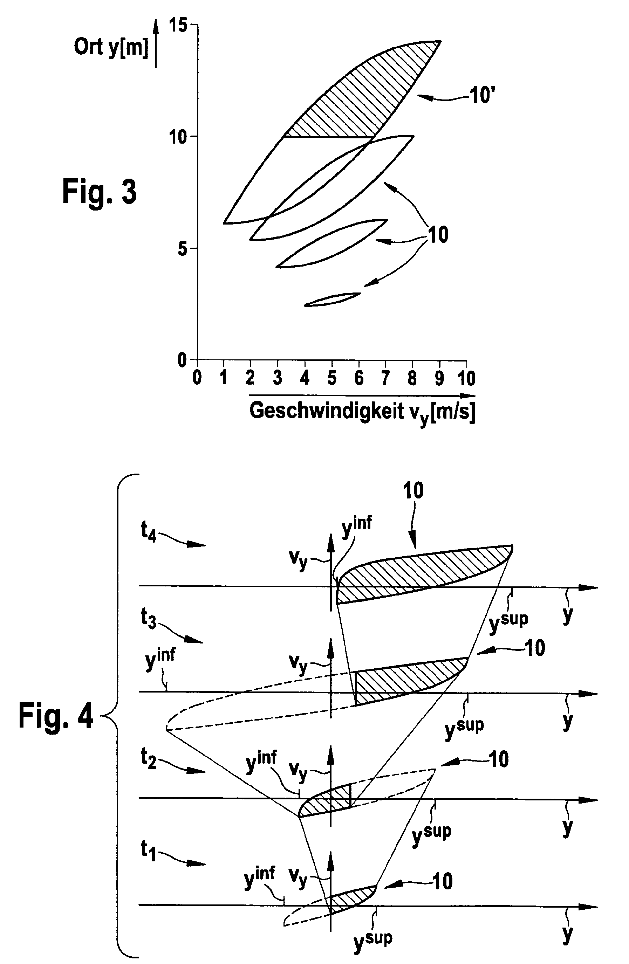

Dadurch ist es möglich, für jede laterale Position $y_i$ des Kraftfahrzeugs 1 die maximale und minimale laterale Geschwindigkeit $v_y^{sup}$, $v_y^{inf}$ zu berechnen. Dies wird für das Kraftfahrzeug 1 in Figur 2 veranschaulicht. Sonach ergeben sich Flächen 10, 10', wie sie in Figur 3 beispielhaft für eine Propagation bei einer Startgeschwindigkeit von $v_y$ = 5 m/s und einer maximalen Beschleunigung von $a_y$ = 0,2g (g = 9,81 m/s²) für den Zeitraum t = 0...2,5 s dargestellt sind. In Figur 3 ist auf der vertikalen Achse die laterale Position y und auf der horizontalen Achse die laterale Geschwindigkeit $v_y$ aufgetragen. Anhand dieser Diagramme bzw. Flächen 10, 10' lässt sich nun zu jedem Passierungspunkt i bzw. jeder longitudinalen Position $x_i$ an dem Hindernis 11 die maximale und minimale erreichbare Position $y_i^{sup}$, $y_i^{inf}$ als Positions-

intervall i (y-i$^{inf}$, y$_i$$^{sup}$) ermitteln, d. h. für die longitudinalen Positionen x$_i$ des Kraftfahrzeugs 1 wird jeweils ein zugehöriges erreichbares laterales Positionsintervall (y$_i$$^{inf}$, y$_i$$^{sup}$) des Kraftfahrzeugs 1 berechnet.

Wird das eigene Kraftfahrzeug 1 durch die Hindernisse 11 (siehe Figur 5) oder einen Fahrbahnrand beschränkt, so werden die Flächen 10, 10' begrenzt bzw. beschnitten, in dem die obere bzw. untere Spitze an der zugehörigen y-Position abgetrennt wird, wie es in Figur 3 durch die teilweise schraffierte Fläche 10' für die letzte dargestellte Propagation angedeutet ist. In diesem Fall darf das Kraftfahrzeug 1 an der longitudinalen Position x$_i$ nicht weiter als +10 m aus der Nulllinie heraus seitlich versetzt werden, da es sonst mit einem Hindernis 11 kollidieren würde. Anschließend darf nur noch mit dieser beschnittenen Fläche 10', die in diesem Fall von y$^{inf}$ = 6m bis y$^{sup}$ =10m reicht, weiter propagiert werden. Die beschnittenen y-v$_y$-Diagramme entwickeln sich bei der weiteren Propagation im Wesentlichen wiederum entsprechend Gleichung (d), d. h. die weitere Berechnung der erreichbaren maximalen und minimalen lateralen Positionen y$^{sup}$, y$^{inf}$ kann analog erfolgen. Somit können trotz mehrmaliger Begrenzung der befahrbaren Bereiche durch unterschiedliche Hindernisse 11 die nachfolgenden erreichbaren Positionen sehr gut bestimmt werden. Vorteilhaft ist insbesondere die mögliche Variation der Propagationsschrittweite Δt, so dass die maximale und minimale laterale Geschwindigkeit v$_y$$^{sup}$, v$_y$$^{inf}$ beim Erreichen des nächsten Hindernisses 11 sofort berechnet werden können. Auf Höhe des Hindernisses 11 lässt sich anhand der maximalen und minimalen lateralen Position y$^{sup}$, y$^{inf}$ ein Passierungstor für das Passieren definieren, das zum einen von dem Kraftfahrzeug 1 tatsächlich erreichbar ist und zum anderen sicher kollisionsfrei ist. Figur 4 verdeutlicht dieses Verfahren durch eine beispielhafte Propagationssequenz. Es sind für die vier Zeitpunkte t$_1$ bis t$_4$ jeweils die erreichbaren lateralen Positionen y$^{sup}$, y$^{inf}$ angegeben, welche im Anschluss durch die in Figur 5 dargestellten Sperrflächen bzw. Sperrbereiche 12 der Hindernisse 11 lateral begrenzt bzw. beschnitten wurden. Die erreichbaren lateralen Positionen y$^{sup}$, y$^{inf}$ lassen sich ablesen, wobei das zu durchfahrende Passierungstor jeweils durch Schraffuren angedeutet ist. Die Abstände in Längsrichtung zwischen den Passierungstoren sind in Figur 4 aufgrund der orthogonalen Zerlegung nicht dargestellt und werden nur in Form der Zeitpunkte t$_1$ bis t$_4$ benötigt.

Figur 5 zeigt ein Beispielsszenario mit einem Kraftfahrzeug 1 und vier Hindernissen 11. In einem Umgebungsraum des Kraftfahrzeugs 1 werden Sperrbereiche 12 anhand der longitudinalen Bewegung des Kraftfahrzeugs 1 und der lateralen Position des entsprechenden Hindernisses 11 definiert, welche aufgrund einer gleichzeitigen örtlichen Überdeckung des Kraftfahrzeugs 1 mit dem Hindernis 11 zu einer Kollision führen würden und somit nicht durch das Kraftfahrzeug 1 befahren werden dürfen. Die Sperrbereiche 12 sind mit zusätzlichen Sicherheitsbereichen (nicht dargestellt) versehen, welche die Geometrie des Kraftfahrzeugs 1 und deren mögliche Drehung bei einem durch das Befahren der kollisionsvermeidenden Trajektorie 13 bedingten Gierwinkel berücksichtigen. Dementsprechend ergibt sich unter Berücksichtigung der Geometrie des Kraftfahrzeugs 1 um jedes Hindernis 11 die Sperrfläche bzw. der Sperrbereich 12, welcher bei einem Betreten durch das Kraftfahrzeug 1 zwangsläufig zu einer Kollision führt. Anhand dieser Sperrbereiche 12 wird die laterale Position y des Kraftfahrzeugs 1 bzw. des Ego-Fahrzeugs begrenzt, wodurch sich die Passierungstore Gate1 bis Gate9 ergeben, welche durch das Kraftfahrzeug 1 erreichbar und befahrbar sind und somit das Kraftfahrzeug 1 kollisionsfrei an den Hindernissen 11 vorbeiführen. Somit werden die erreichbaren lateralen Positionsintervalle y$_i$$^{inf}$, y$_i$$^{sup}$ durch die jeweiligen Sperrbereiche 12 der Hindernisse 11 beschnitten und/oder begrenzt, wodurch sich die Passierungstore Gate1 bis Gate9 ergeben.

Bei dem erfindungsgemäßen Verfahren kann auch eine beschleunigte Bewegung des Kraftfahrzeugs 1 und/oder der Hindernisse 11 bei der Berechnung der kollisionsvermeidenden Trajektorie 13 berücksichtigt werden.

Die Abmessung und Position eines jeden Sperrbereichs 12 erfolgt aus dem ersten Kontaktpunkt x$_i$ in Längsrichtung, beispielsweise bei einem vorausfahrenden Fahrzeug als Hindernis 11, der Ort, an dem die Vorderkante des Kraftfahrzeugs 1 das Heck des vorausfahrenden Hindernisses 11 berührt und dem letzten Kontaktpunkt, der sich dann aus der Berührung der vorderen Stoßstange des Hindernisses 11 mit der hinteren Stoßstange des Kraftfahrzeugs 1 ergibt, wenn das Kraftfahrzeug 1 das Hindernis 11 virtuell durchfahren könnte. Bei unterschiedlichen Gierwinkeln kann der Einfachheit halber die Verdrehung der Geometrien im Sperrbereich 12 berücksichtigt werden, indem der erste und der letzte Kontaktpunkt, sowie die maximale und minimale laterale Ausdehnung unabhängig voneinander heran gezogen werden, so dass der Sperrbereich 12 sich aus der umgebenden Begrenzungskontur (Bounding-Box) ergibt. Nimmt man im einfachsten Fall eine unbeschleunigte Bewegung des Kraftfahrzeugs 1 und der Hindernisse 11 an, so lassen sich der erste und der letzte Kontaktzeitpunkt und -ort anhand der folgenden kinematischen Gleichungen berechnen:

$$(e) \qquad x_{\text{Kraftfahrzeug}} = v_0 t$$

$$(f) \qquad x_{\text{Hindernis}} = x_0 + v_{\text{Hindernis}} t$$

$$\text{(g)} \qquad t_{Kontakt} = x_0/(v_0 - v_{Hindernis})$$

$$\text{(h)} \qquad x_{Kontakt} = (v_0\, x_0)/(v_0 - v_{Hindernis})$$

Im beschleunigten Fall des Kraftfahrzeugs 1 und/oder der Hindernisfahrzeuge 11 werden die Gleichungen (e) bis (h) entsprechend aufwändiger bzw. detaillierter, wobei auch ein Intervall für die Beschleunigung möglich ist, in dem die Gleichungen jeweils für die Konstellationen im schlechtesten Fall (worst case) aufgestellt werden müssen, so dass die Ausdehnung der Sperrbereiche 12 maximal wird. Die prinzipielle Berechnung der Sperrbereiche 12 durch den ersten und letzten Kontaktpunkt verändert sich dabei aber nicht.

Im einfachsten Fall sind, wie aus Figur 5 ersichtlich, alle Hindernisse 11 unbewegt, so dass sich die Sperrbereiche 12 sofort aus der Position des Hindernisses 11 zum Zeitpunkt t = 0 ergeben. Betrachtet man ferner die laterale Position des Hindernisses 11 zum ersten und letzten Kontaktzeitpunkt und berücksichtigt die Geometrie des Kraftfahrzeugs 1 mit Hilfe eines zusätzlichen Sicherheitsbereichs, so lässt sich aus diesen Koordinaten der Sperrbereich 12 für jedes Hindernis 11 unmittelbar angeben. Ein entsprechender Ausweichpfad muss um sämtliche Sperrbereiche 12 herumgeführt werden.

Im Falle eines kurvenförmigen Straßenverlaufs lässt sich darüber hinaus durch Projektion der gekrümmten Fahrbahn in einen geraden Verlauf das gleiche Berechnungsverfahren für die Sperrbereiche 12 anwenden und somit auch ein Pfad für den Kurvenverlauf berechnen.

Anhand der Sperrbereiche 12 lassen sich nun der maximal und minimal erreichbare laterale Versatz $\Delta y$ zu den Hindernissen 11 anhand der in Figur 3 gezeigten Geschwindigkeitspropagation berechnen, indem sich aus dem Diagramm das erreichbare Passierungstor Gate1 bis Gate9 durch die maximal und minimal lateral erreichbare Position $y^{sup}$ und $y^{inf}$ ergibt, so dass ein möglicher Ausweichpfad eine bestimmte Passierungstorsequenz durchläuft.

Ein Hindernis 11 kann sowohl rechts als auch links passiert werden, dadurch ergeben sich bei n vorhandenen Hindernissen 11 maximal $2^n$ mögliche Ausweichpfade. Wie aus Figur 5 ersichtlich, schränken die Sperrbereiche 12 in diesem Anwendungsfall die möglichen kollisionsfreien Pfade jedoch auf lediglich zwei statt der maximalen $2^4 = 16$ Ausweichpfade ein, welche durch die Sequenzen der Passierungstore Gate1 - Gate2 - Gate3 - Gate4 - Gate5 - Gate6 - Gate7 und Gate1 - Gate2 - Gate3 - Gate8 - Gate9 markiert sind.

Für eine Sequenz von Passierungstoren Gate1 bis Gate9 lässt sich nun eine kollisionsfreie Ausweichtrajektorie, d. h. eine kollisionsvermeidende Trajektorie 13, welche durch die lateralen Positionsintervalle $y^{inf}$, $y^{sup}$ bzw. die Passierungstore Gate1 bis Gate9 mittels eines Optimierungsverfahrens berechnen, wobei die obere Grenze $y_i^{sup}$ und die untere Grenze $y_i^{inf}$ des lateralen Positionsintervalls i ($y_i^{sup}$, $y_i^{inf}$) als Randbedingung in dem Optimierungsverfahren berücksichtigt wird. Unter der Randbedingung, dass für das Passierungstor Gate(i) an der Position $x_i$ die Trajektorie 13 kleiner oder gleich der oberen Torbegrenzung $y_i^{sup}$ und größer oder gleich der unteren Torbegrenzung $y_i^{inf}$ sein muss, lässt sich beispielsweise ein krümmungsstetiger Spline berechnen, welcher durch die Stützstellen ($x_i$, $y_i$) bei i = 1...n Passierungstoren Gate1 bis Gate9 führt. Demzufolge wird die kollisionsvermeidende Trajektorie 13 durch den krümmungsstetigen Spline beschrieben. In weiteren Ausführungsbeispielen könnte die kollisionsvermeidende Trajektorie 13 auch durch einen Polygonzug mit äquidistanten Stützstellen beschrieben werden.

Als Optimierungskriterium zur Berechnung der noch unbekannten Stützstellen ($x_i$, $y_i$) für den krümmungsstetigen Spline kann beispielsweise die Minimierung des Integrals über das Quadrat der Krümmung $\kappa(s)$ über die gesamte Länge 1 der Trajektorie 13 herangezogen werden:

$$\text{(i)} \qquad F = \int_{s=0}^{l} \kappa(s)^2\, ds = \text{Min!}$$

$$\text{Randbedingung}: \forall y_i(x_i): y_i^{inf}(x_i) \leq y_i(x_i) \leq y_i^{sup}(x_i)$$

Durch die Beschreibung der Trajektorie 13 mittels eines Splines kann das Integral analytisch gelöst werden und das Optimierungskriterium direkt in Abhängigkeit der Parameter des Splines angegeben werden. Der Verlauf der Trajektorie 13 im Intervall i wird durch ein Polynom dritter Ordnung beschrieben:

$$(j) \qquad y^i(x) = p_0{}^i + p_1{}^i x + p_2{}^i x^2 + p_3{}^i x^3$$

Setzt man für die Krümmung $\kappa$ im Intervall i in sehr guter Näherung aufgrund des typischerweise langgezogenen Verlaufs der Ausweichtrajektorie 13 die Ableitung zweiter Ordnung $y^{i''}(x)$ an, so folgt aus den Parametern des Spline-Polynoms $p_0{}^i$ bis $p_3{}^i$ für das Optimierungskriterium:

$$(k) \qquad F = \int_{s=0}^{l} \kappa(s)^2 \, ds \approx \int_{x=0}^{x_n} y''(x) dx = 4 \sum_{i=0}^{n-1} p_2{}^{i\,2} (x_{i+1} - x_i) + 3 p_2{}^i p_3{}^i (x_{i+1} - x_i)^2 + 3 p_3{}^{i\,2} (x_{i+1} - x_i)^3$$

Es können jedoch auch beliebige andere Optimierungsverfahren und daraus abgeleitete Optimierungskriterien verwendet werden. So sind beispielsweise die Minimierung der maximal auftretenden Querbeschleunigung oder gewichtete Kombinationen beider Kriterien denkbar.

Die kollisionsvermeidende Trajektorie 13 kann, wie in Figur 6 dargestellt, auch durch Stützstellen in äquidistanten Abständen beschrieben werden. Dabei wird durch die Passierungstore Gate1 bis Gate6 ein Fahrschlauch 14 definiert, dessen Ränder 15a, 15b die Ausweichtrajektorie 13 nach oben und unten begrenzen. Der sich dadurch ergebende Polygonzug muss obiges oder eventuell ein alternatives Optimierungskriterium minimieren. Sonach wird durch die Passierungstore Gate1 bis Gate6 die mögliche kollisionsvermeidende Trajektorie 13 beschrieben, welche durch das Kraftfahrzeug 1 entsprechend seiner vorgegebenen fahrdynamischen Eigenschaften erreichbar ist und welche kollisionsfrei an den Hindernissen 11 vorbeiführt.

In vorteilhafter Weise kann nun auf dem Kraftfahrzeug 1 das Verfahren zur Kollisionsvermeidung für das Kraftfahrzeug 1 betrieben werden, bei welchem sich bei einem sich während der Fahrt nähernden Hindernis 11 ein Fahrmanöver des Kraftfahrzeugs 1 zum Ausweichen autonom oder semiautonom durchgeführt oder vorgeschlagen wird, wobei das Fahrmanöver auf der kollisionsvermeidenden Trajektorie 13 basiert.

**Patentansprüche**

1. Verfahren zur Berechnung einer kollisionsvermeidenden Trajektorie (13) für ein Fahrmanöver eines Fahrzeugs, insbesondere Kraftfahrzeugs (1), um wenigstens einem sich während der Fahrt dem Kraftfahrzeug (1) nähernden Hindernis (11) auszuweichen, **dadurch gekennzeichnet, dass** die laterale Geschwindigkeit ($v_y$) des Kraftfahrzeugs (1) unabhängig von der longitudinalen Geschwindigkeit des Kraftfahrzeugs (1) bei der Berechnung berücksichtigt wird.

2. Verfahren nach Anspruch 1, **dadurch gekennzeichnet, dass** in einem Umgebungsraum des Kraftfahrzeugs (1) Sperrbereiche (12) anhand der longitudinalen Bewegung des Kraftfahrzeugs (1) und der lateralen Position des wenigstens einen Hindernisses (11) definiert werden, welche aufgrund der sehr hohen Kollisionswahrscheinlichkeit mit dem Hindernis (11) nicht durch das Kraftfahrzeug (1) befahren werden dürfen.

3. Verfahren nach Anspruch 2, **dadurch gekennzeichnet, dass** die Sperrbereiche (12) mit zusätzlichen Sicherheitsbereichen versehen werden, welche die Geometrie des Kraftfahrzeugs (1) und deren mögliche Drehung bei einem durch das Befahren der kollisionsvermeidenden Trajektorie (13) bedingten Gierwinkel berücksichtigen.

4. Verfahren nach einem der Ansprüche 1, 2 oder 3, **dadurch gekennzeichnet, dass** für wenigstens annähernd jede longitudinale Position ($x_i$) des Kraftfahrzeugs (1) ein zugehöriges erreichbares laterales Positionsintervall ($y_i^{inf}$, $y_i^{sup}$) des Kraftfahrzeugs (1) berechnet wird.

5. Verfahren nach Anspruch 4, **dadurch gekennzeichnet, dass** das erreichbare laterale Positionsintervall ($y_i^{inf}$, $y_i^{sup}$) durch den Sperrbereich (12) des wenigstens einen Hindernisses (11) beschnitten und/oder begrenzt wird, wodurch sich ein Passierungstor ergibt.

6. Verfahren nach Anspruch 5, **dadurch gekennzeichnet, dass** durch die Passierungstore (Gate1 bis Gate9) eine mögliche kollisionsvermeidende Trajektorie (13) beschrieben wird, welche durch das Kraftfahrzeug (1) entsprechend seiner vorgegebenen fahrdynamischen Eigenschaften erreichbar ist und welche kollisionsfrei an dem wenigstens einen Hindernis (11) vorbeiführt.

7. Verfahren nach einem der Ansprüche 1 bis 6, **dadurch gekennzeichnet, dass** die kollisionsvermeidende Trajektorie (13) durch einen krümmungsstetigen Spline und/oder einen Polygonzug mit äquidistanten Stützstellen (($x_0$, $y_0$) bis ($x_6$, $y_6$)) beschrieben wird.

8. Verfahren nach Anspruch 6 oder 7, **dadurch gekennzeichnet, dass** die kollisionsvermeidende Trajektorie (13), welche durch die Passierungstore (Gate1 bis Gate9) führt, mittels eines Optimierungsverfahrens berechnet wird, wobei die obere Grenze ($y_i^{sup}$) und die untere Grenze ($y_i^{inf}$) des lateralen Positionsintervalls ($y_i^{inf}$, $y_i^{sup}$) als Randbedingung in dem Optimierungsverfahren berücksichtigt wird.

9. Verfahren nach einem der Ansprüche 1 bis 8, **dadurch gekennzeichnet, dass** eine beschleunigte Bewegung des Kraftfahrzeugs (1) und/oder des wenigstens einen Hindernisses (11) bei der Berechnung der kollisionsvermeidenden Trajektorie (13) berücksichtigt wird.

10. Verfahren zur Kollisionsvermeidung für ein Fahrzeug, insbesondere Kraftfahrzeug (1), bei welchem bei einem sich während der Fahrt nähernden Hindernis (11) ein Fahrmanöver des Kraftfahrzeugs (1) zum Ausweichen autonom oder semiautonom durchgeführt oder vorgeschlagen wird, wobei das Fahrmanöver auf einer mittels eines Verfahrens nach einem der Ansprüche 1 bis 9 berechneten kollisionsvermeidenden Trajektorie (13) basiert.

11. Computerprogramm mit Programmcodemitteln, um ein Verfahren gemäß einem der Ansprüche 1 bis 10 durchzuführen, wenn dass Programm auf einem Mikroprozessor eines Mikrocomputers, insbesondere auf einer Steuereinrichtung (6) eines Fahrerassistenzsystems (2), ausgeführt wird.

12. Computerprogrammprodukt mit Programmcodemitteln, die auf einem computerlesbaren Datenträger gespeichert sind, um ein Verfahren gemäß einem der Ansprüche 1 bis 10 durchzuführen, wenn dass Programm auf einem Mikroprozessor eines Mikrocomputers, insbesondere auf einer Steuereinrichtung (6) eines Fahrerassistenzsystems (2), ausgeführt wird.

13. Vorrichtung, insbesondere Fahrerassistenzsystem (2) eines Fahrzeugs, insbesondere Kraftfahrzeugs (1), zur Durchführung des Verfahrens gemäß einem der Ansprüche 1 bis 10, mit wenigstens einer Erfassungseinrichtung (3a,3b) zur Detektion von Hindernissen (11) in einer Umgebung des Kraftfahrzeugs (1), und einer Steuereinrichtung (6), welche mit der wenigstens einen Erfassungseinrichtung (3a,3b) verbunden ist und welche zur Ausführung eines Computerprogramms gemäß Anspruch 11 eingerichtet ist.

**Claims**

1. Method for the calculation of a collision-preventing trajectory (13) for a driving manoeuvre of a vehicle, in particular of a motor vehicle (1), in order to avoid at least one obstacle (11) which the motor vehicle (1) approaches during the journey, **characterized in that** the lateral speed ($v_y$) of the motor vehicle (1) is taken into account in the calculation independently of the longitudinal speed of the motor vehicle (1).

2. Method according to Claim 1, **characterized in that** prohibited areas (12) are defined in an area surrounding the motor vehicle (1) on the basis of the longitudinal movement of the motor vehicle (1) and the lateral position of the at least one obstacle (11), in which prohibited areas (12) the motor vehicle (1) must not travel owing to the very high probability of collision with the obstacle (11).

3. Method according to Claim 2, **characterized in that** the prohibited areas (12) are provided with additional safety areas which take into account the geometry of the motor vehicle (1) and its possible rotation in the case of a yaw angle which is conditioned by travelling at the collision-preventing trajectory (13).

4. Method according to one of Claims 1, 2 or 3, **characterized in that** an associated attainable lateral position interval ($y_i^{inf}$, $y_i^{sup}$) of the motor vehicle (1) is calculated for at least approximately every longitudinal position ($x_i$) of the motor vehicle (1).

5. Method according to Claim 4, **characterized in that** the attainable lateral position interval ($y_i^{inf}$, $y_i^{sup}$) is intersected and/or bounded by the prohibited area (12) of the at least one obstacle (11), as a result of which a passing gate is produced.

6. Method according to Claim 5, **characterized in that** a possible collision-preventing trajectory (13) is described by the passing gate (gate 1 to gate 9), which trajectory (13) can be reached by the motor vehicle (1) in accordance with its predefined vehicle movement dynamics properties and passes the at least one obstacle (11) without a collision.

7. Method according to one of Claims 1 to 6, **characterized in that** the collision-preventing trajectory (13) is described by a spline with a constant curvature and/or a polygonal line with equidistant reference points (($x_0$, $y_0$) to ($x_6$, $y_6$)).

8. Method according to Claim 6 or 7, **characterized in that** the collision-preventing trajectory (13) which leads through the passing gates (gate 1 to gate 9) is calculated by means of an optimization method, wherein the upper boundary ($y_i^{sup}$) and the lower boundary ($y_i^{inf}$) of the lateral position interval ($y_i^{inf}$, $y_i^{sup}$) are taken into account as peripheral conditions in the optimization method.

9. Method according to one of Claims 1 to 8, **characterized in that** an accelerated movement of the motor vehicle (1) and/or of the at least one obstacle (11) is taken into account in the calculation of the collision-preventing trajectory (13).

10. Method for preventing a collision for a vehicle, in particular a motor vehicle (1), in which, when an obstacle (11) is being approached during a journey, a driving manoeuvre of the motor vehicle (1) for the purpose of avoidance is carried out or proposed autonomously or semi-autonomously, wherein the driving manoeuvre is based on a collision-preventing trajectory (13) which is calculated by means of a method according to one of Claims 1 to 9.

11. Computer program with program code means for carrying out a method according to one of Claims 1 to 10 when this program is executed on a microprocessor of a microcomputer, in particular on a control device (6) of a driving assistance system (2).

12. Computer program product with program code means which are stored on a computer-readable data carrier in order to carry out a method according to one of claims 1 to 10 when the program is executed on a microprocessor of a microcomputer, in particular on a control device (6) of a driver assistance system (2).

13. Device, in particular driver assistance system (2) of a vehicle, in particular a motor vehicle (1), for carrying out the method according to one of Claims 1 to 10, having at least one detection device (3a, 3b) for detecting obstacles (11) in the surroundings of the motor vehicle (1), and a control device (6) which is connected to the at least one detection device (3a, 3b) and which is configured to carry out a computer program according to Claim 11.

**Revendications**

1. Procédé de calcul d'une trajectoire (13) évitant les collisions lors d'une manoeuvre de conduite d'un véhicule, en particulier d'un véhicule automobile (1), et en particulier pour contourner un obstacle (11) qui s'approche lors de l'avancement du véhicule automobile (1), **caractérisé en ce que** lors du calcul, la vitesse latérale ($v_y$) du véhicule automobile (1) est prise en compte indépendamment de la vitesse longitudinale du véhicule automobile (1).

2. Procédé selon la revendication 1, **caractérisé en ce que** des zones interdites (12) sont définies dans l'espace qui environne le véhicule automobile (1) à l'aide du déplacement longitudinal du véhicule (1) et de la position latérale du ou des obstacles (11), ces zones interdites ne pouvant être traversées par le véhicule (1) à cause d'une très haute probabilité de collision avec l'obstacle (11).

3. Procédé selon la revendication 2, **caractérisé en ce que** les zones interdites (12) sont dotées de zones supplémentaires de sécurité qui tiennent compte de la géométrie du véhicule automobile (1) et de sa rotation éventuelle d'un angle de lacet qui découle de son déplacement sur une trajectoire (13) évitant les collisions.

4. Procédé selon l'une des revendications 1, 2 ou 3, **caractérisé en ce qu'**un intervalle latéral accessible de position ($y_i^{inf}$, $y_i^{sup}$) associé du véhicule automobile (1) est calculé pour approximativement au moins chaque position longitudinale ($x_i$) du véhicule automobile (1).

**5.** Procédé selon la revendication 4, **caractérisé en ce que** l'intervalle latéral accessible de position ($y_i^{inf}$, $y_i^{sup}$) est découpé et/ou limité par la zone interdite (12) du ou des obstacles (11), ce qui fournit une fenêtre de passage.

**6.** Procédé selon la revendication 5, **caractérisé en ce qu'**une trajectoire possible (13) évitant les collisions est décrite par les fenêtres de passage (Gate1 à Gate9), cette trajectoire pouvant être réalisée par le véhicule automobile (1) du fait de ses propriétés prédéterminées de dynamique de roulage et passant sans collision le long du ou des obstacles (11).

**7.** Procédé selon l'une des revendications 1 à 6, **caractérisé en ce que** la trajectoire (13) évitant les collisions est décrite par une fonction dite spline à courbure constante et/ou par un trait polygonal dont les points d'appui (($x_0$, $y_0$) à ($x_6$, $y_6$)) sont équidistants.

**8.** Procédé selon les revendications 6 ou 7, **caractérisé en ce que** la trajectoire (13) évitant les collisions qui passe par les fenêtres de passage (Gate1 à Gate9) est calculée au moyen d'un procédé d'optimisation, la limite supérieure ($y_i^{sup}$) et la limite inférieure ($y_i^{inf}$) de l'intervalle latéral de position ($y_i^{inf}$, $y_i^{sup}$) étant prises en compte dans les conditions aux limites du procédé d'optimisation.

**9.** Procédé selon l'une des revendications 1 à 8, **caractérisé en ce que** lors du calcul de la trajectoire (13) évitant les collisions, il tient compte d'un déplacement accéléré du véhicule automobile (1) et/ou du ou des obstacles (11).

**10.** Procédé en vue d'éviter les collisions d'un véhicule, en particulier un véhicule automobile (1), dans lequel au cas où un obstacle (11) s'approche pendant le déplacement du véhicule, une manoeuvre de conduite du véhicule automobile (1) est exécutée ou proposée pour contourner de manière autonome ou semi-autonome l'obstacle, la manoeuvre de conduite étant basée sur une trajectoire (13) évitant les collisions calculée au moyen d'un procédé selon l'une des revendications 1 à 9.

**11.** Programme informatique présentant des moyens de code de programme en vue d'exécuter un procédé selon l'une des revendications 1 à 10, lorsque le programme est exécuté sur le microprocesseur d'un micro-ordinateur, en particulier sur le dispositif de commande (6) d'un système (2) d'assistance au conducteur.

**12.** Produit de programme informatique doté de moyens de code de programme qui sont conservés en mémoire sur un support de données lisible par ordinateur en vue d'exécuter un procédé selon l'une des revendications 1 à 10, lorsque le programme est exécuté sur le microprocesseur d'un micro-ordinateur, en particulier sur le dispositif de commande (6) d'un système (2) d'assistance au conducteur.

**13.** Dispositif, en particulier système (2) d'assistance au conducteur d'un véhicule et en particulier d'un véhicule automobile (1), en vue de l'exécution du procédé selon l'une des revendications 1 à 10, et comprenant au moins un dispositif de saisie (3a, 3b) qui détecte des obstacles (11) dans l'environnement du véhicule automobile (1) et un dispositif de commande (6) qui est relié au dispositif ou aux dispositifs de saisie (3a, 3b) et qui est conçu pour exécuter un programme informatique selon la revendication 11.

**Fig. 1**

**Fig. 2**

Ort y[m]

15

10

5

0

Fig. 3

10'

10

0 1 2 3 4 5 6 7 8 9 10

Geschwindigkeit $v_y$[m/s]

Fig. 4

10

$t_4$

$y^{inf}$

$v_y$

$y^{sup}$

y

$t_3$

$y^{inf}$

$v_y$

10

$y^{sup}$

y

$t_2$

$y^{inf}$

$v_y$

10

$y^{sup}$

y

$t_1$

$y^{inf}$

$v_y$

10

$y^{sup}$

y

Fig. 5

$(x_1,y_1)$

$y_1^{sup}$

$(x_0,y_0)$

$y_1^{inf}$

Gate1

$y_2^{sup}$

$(x_2,y_2)$

$y_2^{inf}$

Gate2

$y_3^{sup}$

$(x_3,y_3)$

$y_3^{inf}$

Gate3

14

$y_4^{sup}$

$(x_4,y_4)$

$y_4^{inf}$

Gate4

$y_5^{sup}$

15a

$(x_5,y_5)$

13

$y_6^{sup}$

$(x_6,y_6)$

$y_5^{inf}$

15b

Gate5

$y_6^{inf}$

Gate6

**Fig. 6**

**IN DER BESCHREIBUNG AUFGEFÜHRTE DOKUMENTE**

**In der Beschreibung aufgeführte Patentdokumente**

- DE 102004056120 A1
- US 20050192749 A1
- DE 4207001 A1
- US 2004236491 A1